# EUROPÄISCHE PATENTANMELDUNG

(11) **EP 1 860 083 A2**
(43) Veröffentlichungstag der Anmeldung: **28.11.2007**
(21) Anmeldenummer: 07009670.6
(22) Anmeldetag: 15.05.2007
(51) Int. Cl.: C04B 41/49

(54) **Konservierungsverfahren für Objekte insbesondere Gesteine**

(30) Priorität: 24.05.2006 DE 102006024335
(71) Anmelder: IBACH Steinkonservierung GmbH & Co. KG, 96120 Bischberg/Bamberg (DE)
(72) Erfinder:
(74) Vertreter: COHAUSZ DAWIDOWICZ HANNIG & SOZIEN

(57) **Zusammenfassung**

Die Erfindung betrifft ein Verfahren zur konservierenden Durchtränkung des Porensystems eines Objekts insbesondere eines Gesteins mit einem durch Hydrolyse/Kondensation reagierenden Konservierungsmittels insbesondere mit Kieselsäureester wobei
- in einer ersten Phase eine Trocknung des Gesteins bis in den Kern so weit vorgenommen wird, dass die physikalischen Voraussetzungen geschaffen sind, ein Konservierungsmittel aufnehmen zu können und sichergestellt ist, dass der Feuchtegehalt im Porenraum unter dem Wert liegt, bei dem eine vorzeitige - d.h. bereits während der Eindringphase des Konservierungsmittels einsetzende - Hydrolyse und Polykondensation einsetzt,
- in einer zweiten Phase das zu konservierende Objekt auf einen Feuchtegehalt gebracht insbesondere einem Klima ausgesetzt wird, durch das in Abhängigkeit von der spezifischen Porenraum-Oberfläche und der Porenradienverteilung dem Porensystem eine für die Hydrolyse ausreichende Feuchtigkeit zugeführt wird,
- in einer dritten Phase dem Porensystem des Objekts das durch Hydrolyse und Kondensation reagierende Konservierungsmittel mit geeigneten Tränkungsverfahren so zugeführt wird, dass eine Tiefentränkung von mehren cm der Außenschicht bis hin zur Vollfränkung erreicht wird.

## Beschreibung

Die Erfindung betrifft ein Verfahren zur konservierenden Durchtränkung des Porensystems eines Objekts insbesondere eines Gesteins mit einem durch Hydrolyse/Kondensation reagierenden Konservierungsmittel insbesondere mit Kieselsäureester, mit oder ohne hydrophobierendem Zusatz, und reine Hydrophobierungsmittel.

Der Schutz vor Verwitterung und die Konservierung von bereits verwittertem Naturstein geht immer wieder von der Vorstellung aus, die Oberfläche des Gesteines durch Zufuhr von Schutzstoffen zu schützen und zu festigen. Jede Zufuhr von Schutzstoffen führt jedoch in den erreichten Zonen zu einer Änderung der physikalischen Eigenschaften des Gesteins, Mit dieser Änderung der physikalischen Eigenschaften sind häufig Folgeschäden verbunden. Ziel jeder Konservierungsmaßnahme sollte es deshalb sein, diese Änderung möglichst gering zu halten und gleichzeitig diese Veränderung über den gesamten Querschnitt des Gesteins - d.h. bis in den Kem - herzustellen, um Zonen mit unterschiedlichen physikalischen Eigenschaften zu vermeiden. Realisiert wird diese Anforderung mit dem seit 1972 entwickelten Acrylharzvolltränkungs-Verfahren (AVT), bei dem in einem Vollbad das vorher vollkommen getrocknete Gestein unter Zuhilfenahme von Vakuum und Druck bis in den Kern mit Methylmethacrylat (MMA) getränkt wird, und anschließend das MMA zu Acrylglas polymersiert wird. Die mit diesem Verfahren einhergehende Änderung der physikalischen Eigenschaften ist erheblich. Da diese Änderung allerdings über den gesamten Querschnitt des Objektes erfolgt, ergibt sich nach der Konservierungsmaßnahme ein homogener Körper, mit hoher Festigkeit und hoher Witterungsbeständigkeit.

Voraussetzung für die Durchführung dieses Verfahrens ist der Abbau der Objekte und der Transport zu einer hierfür entwickelten Konservierungsanlage, Versuche, dieses Verfahren auch für die in situ-Anwendung zu modifizieren, wurden nicht weiterverfolgt, nicht zuletzt aufgrund des für den reibungslosen Prozessablauf zwingend erforderlichen hohen Trocknungsgrades, der mit wirtschaftlich vertretbarem Aufwand vor Ort nicht erreichbar ist.

Schwerpunktmäßig bei in-situ-Konservierungsmaßnahmen kommen seit vielen Jahren Konservierungsstoffe zum Einsatz, die aufgrund ihrer für die Hydrolyse und anschließende Polykondensation erforderlichen Anwesenheit von Wasser eine durchgehende Trocknung bis in den Kembereich des Gesteins angeblich nicht erforderlich machen. Diese SiO2 abscheidenden Mittel zeigen in Laborversuchen an getrockneten Gesteinsproben ein gutes Eindringverhalten. Bei nicht ausreichend getrockneten Objekten sind dem tiefen Eindringen jedoch Grenzen gesetzt, wie nachfolgend erläutert wird. Diese Grenzen können auch mit unterschiedlichen, z.T. sehr aufwendigen Applikationstechniken wie langfristigem Fluten, Dauerberieselung, vakuumunterstützter Folientränkung aber auch durch eine mit Abbau verbundene Vollbadtränkung nicht überschritten werden. Versuche haben ergeben, dass das Konservierungsmittel bereits während der Eindringphase zu hydrolisieren beginnt, und das entstehende Kieselgel die Kapillaren so verstopft, dass ein weiteres Vordringen unterbunden wird,

Die Anwender dieser Konservierungsmittel geben sich in der Regel mit Eindringtiefen von wenigen mm oder cm zufrieden. Für diese sehr niedrig angesetzte Anforderung ist es ausreichend, dass nur die Poren des oberflächennahen Bereichs soweit vom Wasser befreit sind, dass zumindest eine kleine Menge des Konservierungsmittels in die Poren des oberflächennahen Bereichs eindringen kann, Da bei einer derartigen in situ Anwendung das Angebot des Konservierungsmittels in der Regel nur wenige Minuten beträgt, wird es als nicht schädlich angesehen, wenn die Hydrolyse in diesem Bereich sehr schnell beginnt.

Für eine Tiefentränkung über mehrere cm oder für die oft erstrebenswerte völlige Durchtränkung bis in den Kern sind jedoch andere Anforderungen zu erfüllen, Je nach Gesteinsart und Objektgröße sind Eindringzeiten von mehreren Stunden - bis Tagen - zu berücksichtigen. Versuche haben ergeben, dass mit einer Dauerflutung über mehrere Stunden - auch mit einer durch Unterdruck unterstützen Tränkung unter einer Folie - weder die bei diesen Anwendungen angestrebte hohe Eindringtiefe, geschweige denn eine Volltränkung bis in den Kern erreicht werden kann. Tiefer liegende Zonen werden durch eine Luftumwälzung an der Oberfläche nur sehr langsam ausgetrocknet. Das in diesen Bereichen vorhandene Wasser stellt sich dem Eindringen des Konservierungsmittels in zweifacher Weise entgegen:
1. Physikalisch gesehen blockiert in den Poren befindliches Wasser den Transport von Konservierungsmittel ins Porensystem, weil Konservierungsmittel und Wasser sich innerhalb der Kapillaren nicht vermischen.
2. Chemisch gesehen kommt es in wassergefüllten Poren an der Grenzfläche Konservierungsmittel /Wasser durch Hydrolyse und Polykondensation zur Bildung einer Gelschicht, die wie ein Pfropfen das weitere Eindringen des Konservierungsmittels verhindert.

Diese Gelschicht führt zu einer Trennung der Wasser führenden und der Konservierungsmittel führenden Zone innerhalb der Kapillare. Es kommt zu einem Einschluss des Wassers innerhalb des Gesteins. Dieses eingeschlossene Wasser steht für die Hydrolyse nicht mehr zur Verfügung. Besonders problematisch ist die Pfropfenbildung an den Stellen, an denen kleine Kapillaren von großen Kapillaren abzweigen. Hierzu eine Erläuterung zur Wasseraufnahme und zur Wasserabgabe eines Gesteins:

Bekanntlich findet die Wassersättigung eines Gesteines in mehreren Phasen statt. Die erste Wasseraufnahme erfolgt über die großen Kapillaren und eventuell vorhandene Risse, In einer zweiten Phase saugen die kleineren Kapillaren das Wasser aus den großen Kapillaren heraus und füllen sich dabei bis zur vollständigen Sättigung. Die größeren Kapillaren stehen damit zur Aufnahme eines weiteren Wasserangebotes zur Verfügung.

Auch ein Trocknungsprozeß verläuft in mehreren, im wesentlichen in 3 Phasen. In der ersten Phase wird das oberflächennahe Wasser an die Umgebungsluft abgegeben.

In der zweiten Phase entfernt sich -jedoch wesentlich langsamer - das Wasser aus den großen Kapillaren. In dieser Phase kann bei Kapillaren größer >3 - 5 µm eine Unterstützung mit Unterdruck zu einer Erhöhung des Feuchtetransport führen. Erst in der dritten Phase wird das in den engeren Poren < 3 µm befindliche Wasser abgegeben, diese Wasserabgabe erfolgt jedoch sehr langsam, da sie nur durch Diffusion erfolgt. Ein Kapillarsog in Richtung Gesteinsoberfläche findet nicht mehr statt, weil die großen Kapillaren bereits weitgehend von Wasser befreit sind.

Gibt man sich mit einem Trocknungsgrad zufrieden, der in der zweiten Phase durch das Entleeren der großen Kapillaren erreicht werden kann, wird an das Gestein ein erhebliches Problem herangetragen. An den Übergängen von den großen zu den kleineren Kapillaren kommt es zu einer Reaktion des Konservierungsmittels mit dem Wasser, das in den kleinen Kapillaren steht. Dadurch werden die Zugänge dieser engen Kapillaren verschlossen, das darin noch befindliche Wasser ist eingeschlossen. Ein so behandelter Stein wird frostempfindlich. In Kapillaren mit einem Durchmesser, der mehrfach so groß ist wie der Durchmesser des Wassermoleküle (ca. 0,3mm) kommt es zur Ausbildung von Wasserfilmen, die gefrieren können, wobei bekanntlich in kleinen Kapillaren das Wasser erst bei niedrigeren Temperaturen als in größeren Kapillaren gefriert.

Aufgabe der Erfindung ist es, das Verfahren der eingangs genannten Art so zu verbessern, dass bei einfachen Verfahrensschritten eine sichere gleichmäßige Tiefentränkung oder Volltränkung des Objekts insbesondere des Gesteins erreichbar ist.

Diese Aufgabe wird erfindungsgemäß dadurch gelöst,
- dass in einer ersten Phase eine Trocknung des Gesteins bis in den Kern so weit vorgenommen wird, dass die physikalischen Voraussetzungen geschaffen sind, ein Konservierungsmittel aufnehmen zu können und sichergestellt ist, dass der Feuchtegehalt im Porenraum unter dem Wert liegt, bei dem eine vorzeitige - d.h. bereits während der Eindringphase des Konservierungsmittels einsetzende - Hydrolyse und Polykondensation einsetzt,
- dass in einer zweiten Phase das zu konservierende Objekt auf einen Feuchtegehalt gebracht insbesondere einem Klima ausgesetzt wird, durch das in Abhängigkeit von der spezifischen Porenraum-Oberfläche und der Porenradienverteilung dem Porensystem eine für die Hydrolyse ausreichende Feuchtigkeit zugeführt wird,
- dass in einer dritten Phase dem Porensystem des Objekts das durch Hydrolyse und Kondensation reagierende Konservierungsmittel mit geeigneten Tränkungsverfahren so zugeführt wird, dass eine Tiefentränkung von mehren cm der Außenschicht bis hin zur Volltränkung erreicht wird.

Alternativ wird diese Aufgabe dadurch gelöst,
- dass in einer ersten Phase eine Trocknung des Gesteins bis in den Kern so weit vorgenommen wird, dass die physikalischen Voraussetzungen geschaffen sind, ein Konservierungsmittel aufnehmen zu können und hierbei im zu konservierenden Objekt ein Feuchtegehalt verbleibt bei dem das in Abhängigkeit von der spezifischen Porenraum-Oberfläche und der Porenradienverteilung dem Porensystem eine für die Hydrolyse ausreichende Feuchtigkeit besteht und
- dass in einer zweiten Phase dem Porensystem des Objekts das durch Hydrolyse und Kondensation reagierende Konservierungsmittel mit geeigneten Tränkungsverfahren so zugeführt wird, dass eine Tiefentränkung von mehren cm der Außenschicht bis hin zur Volltränkung erreicht wird.

Durch dieses Verfahren wird eine sichere Tränkung und Hydrolyse je nach Bedarf in einer äußeren Schicht oder vollständig bei in die Tiefe in hoher Gleichmäßigkeit erreicht ohne eine vorzeitige Hydrolyse auszulösen,

Nachdem Hydrophobierungsmittel lange Zeit als harmloser Oberflächenschutz des Gesteins angesehen wurden, hat man erkannt, dass in der Anwendung erhebliche Probleme auftreten können, da insbesondere bei Salz-belasteten Steinen hinter der hydrophobierten Schicht Salzkonzentrationen auftreten. Für dieses neue Verfahren wird eine bis in den Kern wirksame Hydrophobie erreicht, bei der dieses Problem nicht auftritt, da der vorher getrocknete Stein insgesamt wasserabweisend geworden ist.

Vorteilhafte Ausgestaltungen der Erfindung sind in den Unteransprüchen aufgeführt. Bei allen Ansprüchen und Darlegungen wird unter einem Objekt jegliches poröses Material wie Stein oder Holz verstanden.

Ausführungsbeispiele des erfindungsgemäßen Verfahrens werden im folgenden näher beschrieben.

Versuche haben ergeben, dass der Effekt einer vorzeitigen Hydrolyse nicht eintritt, wenn der Porenraum des Gesteins vorher so vorbereitet wird, dass das eindringende Konservierungsmittel nur mit dem an den porenoberflächen gebundenen Wasser in Kontakt kommt und nicht auf freies Wasser im Porenraum stößt. Eine gewisse - berechenbare Menge Wasser (2 bis 3 Moleküllagen auf den Porenwandungen) sind bekanntlich für die Hydrolyse und anschließende Polykondensation erforderlich.

Durch ein einfaches Trocknen sind die beiden sich z.T. widersprechenden Anforderungen - wasserfreie Poren, aber ausreichende Feuchte für die Hydrolyse nicht sicher erreichbar.

Erfindungsgemäß besteht der Verfahrensablauf aus zwei Schritten. Der erste Schritt ist die Vorbereitung des Porenraums für die optimale Aufnahme und Schaffung der Basis für die Hydrolyse des Konsenrierungsmittels. Dieser erste Schritt verläuft in der Regel in zwei Phasen, a=Trockung, b=Klimstisierung, In wenigen Ausnahmefällen - z.B, bei durchgängig großporigen Gesteinen - kann das gewünschte Ergebnis auch ohne die zweite Phase der Klimatisierung erreicht werden.

Der zweite Schritt ist der eigentliche Tränkungsprozeß.

Mit dem ersten Schritt wird der Porenraum mit geeigneten Trocknungsverfahren bis in den Kern getrocknet. Für den Trocknungsprozess geeignet sind alle gängigen Verfahren - z.B. klimatisierte Umluft/Abluftöfen, Unterdruckkammern, mit oder ohne Kältefallen. Durchströmen des Kapillarsystems mit Luft die ggf. erwärmt und/oder getrocknet ist, Adsorptionsverfahren in geeigneten Kammern oder Exsikkatoren, hierunter fallen auch "Folienexsikkatoren". Ziel diese Vorbereitungschrittes ist die Schaffung einer Situation, dass einerseits kein freies Wasser in den Poren ansteht, anderereseits jedoch gewährleistet ist, dass 2 bis 3 Moleküllagen Wasser auf den Porenwandungen zur Verfügung stehen.

Die einzustellende Wassersättigung wird durch die spezifische Oberfläche und die Porenradienverteilung des Gesteins bestimmt und lässt sich aus der Kelvin-Thomson-Gleichung ableiten.

Wenn das für das Objekt individuell berechnete optimale Klima im Porenraum allein durch Trockung nicht erreicht werden kann, ist eine vollkommene Austrocknung des Porenraums und anschließende Klimatisierung erforderlich, d.h. der erste Schritt der Vorbereitung würde in dem Fall aus zwei Phasen bestehen. Die vollkommene Austrocknung ist erreicht, wenn bei einer Temperatur von ca. 30°C in einem Bohrloch eine relative Luftfeuchte von max. 15% gemessen wird, entsprechend bei einer Temperatur von z.B. 65°C sich eine rel. Luftfeuchte von< 9% eingestellt hat.

Dieser geringe Feuchtegrad wäre für die spätere Hydrolyse nicht ausreichend, so dass durch gezielte Klimatisierung eine optimale Ausgleichfeuchte herzustellen ist.

Mit dem zweiten Schritt wird dem Objekt das Konservierungsmittel mit geeigneten Tränkungsverfahren so angeboten, dass die angestrebte Tiefentränkung bis hin zur Volltränkung erreicht wird.

Geeignete Tränkungsverfahren können sein:
das auch bei der AVT zum Einsatz kommende Vakuum-/Druckverfahen im Vollbad,
eine Vollbadtränkung in einer Wanne,
eine Vollbadtränkung, ggf, mit langsamen Anstieg in einem Exsikkator, hierunter fallen auch "Folienexsikkatoren",
Erfindungsgemäß geeignete Kieselsäureester sind beispielsweise solche der allgemeinen Formel Si (OR)4, worin R ein Alkylrest mit 1 bis 6 Kohlenstoffatomen, vorzugsweise 1 bis 3 Kohlenstoffatomen ist. Bevorzugte Kieselsäureester sind somit Methylsilikate, Ethylsilikate und Propylsilikate oder auch Mischester der Kieselsäure mit Methanol, Ethanol und Propanol.

Während des Trocknens und/oder Tränkens kann das Objekt insbesondere der Stein von einer Folie umgeben sein, die vorzugsweise einen luftdichten Abschluss nach außen bildet

Das Verfahren zur Durchtränkung des Porensystems eines Objekts insbesondere Gesteins kann in der ersten Phase erfolgen:
- durch eine Trocknung mit Warmluft, die der Oberfläche des Objekts in ausreichendem Maße angeboten wird,
- durch eine Trocknung mit vorgetrockneter Luft, die der Oberfläche des Objekts in ausreichendem Maße angeboten wird,
- durch eine Trocknung mit vorgetrockneter und/oder erwärmter Luft, die durch Anlegen eines Unterdrucks durch das Porensystem des Objektes gezogen wird,
- durch eine Trocknung durch Zufuhr von Energie, in Form von Infrarotstrahlung, Mikrowelle, Aufheizen des Objektes in einer Trockenkammer, bei Bedarf mit Unterdruckunterstützung in einem Autoclaven,
- durch eine Trocknung in einer Trockenkammer, in der durch Kältefallen und/oder Trockenmittel das Umgebungsklima in der Lage ist, die an der Oberfläche des Objektes anstehende Feuchtigkeit abzuführen,
- der Trocknungsprozess durch geeigneete Meßsysteme kontrolliert wird und ein Trocknungsgrad eingehalten wird, der in Abhängigkeit von der zu späteren Hydrolyse erforderlichen Feuchte, erforderlich ist.

In der zweiten Phase kann zum Schaffen einer Art der Klimatisierungsräumlichkeit eine luftdicht verschweißte Folienverpackung verwendet werden mit Zugabe der dem gewünschten Klima entsprechenden Salzen.

Das Verfahren zur Durchtränkung des Porensystems eines Gesteins kann in der zweiten bzw. dritten Phase erfolgen
- als Vollbadtränkung
- als Vollbadtränkung mit Vakuumunterstützung
- als Vollbadtränkung in einem Autoclaven mit wechselnder Unterdruck- und Überdruckunterstützung
- bei gut saugenden Gesteinen durch einen Dauerflutung oder Dauerberieselung
- durch Anwendung eines der aus der Literatur bekannten Verfahren der vakuumunterstützten Folientränkung
- durch langsames Ansteigen des Pegels des Konservierungsmittels unterhalb einer durch Unterdruck angelegten Folie, so dass unter Berücksichtung der vorher festgestellten Permeabilität des jeweiligen Objekt-Gesteins ein Eindringen des Konservierungsmittel bis in den Kern gewährleistet ist,
- durch Anwendung des patentierten Vakuum - Kreislauf - Festigungsverfahren VKF, wenn und soweit für dieses Verfahren eine Lizenz erworben wird.

Als Kortservierungsmittel wird einerseits Kieselsäureester, mit und ohne hydrophobierenden Zusatz und andererseits ein reines Hydrophobierungsmittel verwendet. auch die Hydrophobierungsmittel sind auf Siland bzw. Silanol-Basis und reagieren durch Hydrolyse und anschließende Polykondensation.

## Patentansprüche

1. Verfahren zur konservierenden Durchtränkung des Porensystems eines Objekts insbesondere eines Gesteins mit einem durch Hydrolyse/Kondensation reagierenden Konservierungsmittels insbesondere mit Kieselsäureester
**dadurch gekennzeichnet, dass**
- dass in einer ersten Phase eine Trocknung des Gesteins bis in den Kern so weit vorgenommen wird, dass die physikalischen Voraussetzungen geschaffen sind, ein Konservierungsmittel aufnehmen zu können und sichergestellt ist, dass der Feuchtegehalt im Porenraum unter dem Wert liegt, bei dem eine vorzeitige - d.h. bereits während der Eindringphase des Konservierungsmittels einsetzende - Hydrolyse und Polykondensation einsetzt,
- dass in einer zweiten Phase das zu konservierende Objekt auf einen Feuchtegehalt gebracht insbesondere einem Klima ausgesetzt wird, durch das in Abhängigkeit von der spezifischen Porenraum-Oberfläche und der Porenradienverteilung dem Porensystem eine für die Hydrolyse ausreichende Feuchtigkeit zugeführt wird,
- dass in einer dritten Phase dem Porensystem des Objekts das durch Hydrolyse und Kondensation reagierende Konservierungsmittel mit geeigneten Tränkungsverfahren so zugeführt wird, dass eine Tiefentränkung von mehren cm der Außenschicht bis hin zur Volltränkung erreicht wird.

2. Verfahren zur Durchtränkung des Porensystems zu konservierenden Objekts insbesondere eines Gesteins mit einem durch Hydrolyse/Kondensation reagierenden Konservierungsmittel insbesondere mit Kieselsäureester,
**dadurch gekennzeichnet, dass**
- dass in einer ersten Phase eine Trocknung des Gesteins bis in den Kern so weit vorgenommen wird, dass die physikalischen Voraussetzungen geschaffen sind, ein Konservierungsmittel aufnehmen zu können und hierbei im zu konservierenden Objekt ein Feuchtegehalt verbleibt bei dem das in Abhängigkeit von der spezifischen Porenraum-Oberfläche und der Porenradienverteilung dem Porensystem eine für die Hydrolyse ausreichende Feuchtigkeit besteht und
- dass in einer zweiten Phase dem Porensystem des Objekts das durch Hydrolyse und Kondensation reagierende Konservierungsmittel mit geeigneten Tränkungsverfahren so zugeführt wird, dass eine Tiefentränkung von mehren cm der Außenschicht bis hin zur Volltränkung erreicht wird.

3. Verfahren nach Anspruch oder 2, **dadurch gekennzeichnet, dass** dem Objekt in der zweiten Phase so viel Feuchtigkeit zugeführt wird, dass zwei bis drei Molleküllagen Wasser auf den Porenwandungen bestehen.

4. Verfahren nach einem der vorherigen Ansprüche, **dadurch gekennzeichnet, dass** die Trocknung mit Warmluft und/oder durch vorgetrockneter Luft erfolgt

5. Verfahren nach Anspruch 4, **dadurch gekennzeichnet, dass** die Luft durch das Porensystem gesaugt oder gedrückt wird.

6. Verfahren nach einem der vorherigen Ansprüche, **dadurch gekennzeichnet, dass** ein Trocknen durch Zufuhr von Energie insbesondere durch Infrarotstrahlung, Mirkowellenstrahlung und/oder durch ein Aufheizen in einer Trockenkammer erfolgt.

7. Verfahren nach Anspruch 6, **dadurch gekennzeichnet, dass** in der Trockenkammer die Feuchtigkeit an der Oberfläche des Objekts insbesondere des Steins abgeführt wird insbesondere durch Kältefallen.

8. Verfahren nach einem der vorherigen Ansprüche, **dadurch gekennzeichnet, dass** das Trocknen unter Unterdruck in einem Autoclaven erfolgt.

9. Verfahren nach einem der vorherigen Ansprüche, **dadurch gekennzeichnet, dass** das Trocknen und/oder Tränken innerhalb einer eng umschließenden luftdichten Abdichtung insbesondere Folie erfolgt.

10. Verfahren nach einem der vorherigen Ansprüche, **dadurch gekennzeichnet, dass** das Tränken mit Konservierungsmittel in einem Vollbad insbesondere mit Vakuum- und/oder Überdruckunterstützung erfolgt.

11. Verfahren nach Anspruch 10, **dadurch gekennzeichnet, dass** das Tränken in einem Autoclaven erfolgt.

12. Verfahren nach einem der vorherigen Ansprüche, **dadurch gekennzeichnet, dass** das Tränken mit Konservierungsmittel durch Dauerflutung oder Dauerberieselung erfolgt.

13. Verfahren nach einem der vorherigen Ansprüche, **dadurch gekennzeichnet, dass** das Tränken mit Konservierungsmittel innerhalb einer eng umschließenden luftdichten Abdichtung insbesondere Folie erfolgt insbesondere bei langsamen Ansteigen des Pegels des Konservierungsmittels.
